# EUROPÄISCHE PATENTSCHRIFT

(11) **EP 2 670 683 B1**
(45) Veröffentlichungstag und Bekanntmachung des Hinweises auf die Patenterteilung: **28.09.2016**
(21) Anmeldenummer: 12753907.0
(22) Anmeldetag: 17.08.2012
(51) Int. Cl.: B65D 47/08, B29C 45/00, B29L 31/56

(54) **KLAPPDECKELVERSCHLUSS MIT BETÄTIGUNGSTEIL UND ORIGINALITÄTSSICHERUNG**
HINGE LID CLOSURE WITH ACTUATING PART AND TAMPER EVIDENT SECURING MEANS
FERMETURE SOUS FORME DE BOUCHON À CHARNIÈRE, POURVUE D'UNE PARTIE D'ACTIONNEMENT ET D'UN INDICATEUR D'EFFRACTION

(30) Priorität: 08.09.2011 DE 102011112616
(43) Veröffentlichungstag der Anmeldung: 11.12.2013
(73) Patentinhaber: Krallmann Kunststoffverarbeitung GmbH, 32120 Hiddenhausen (DE)
(72) Erfinder: GONNERT, Peter, 97645 Ostheim (DE); KRALLMANN, Kerstin, 32105 Bad Salzuflen (DE); KRALLMANN, Rainer, 32120 Hiddenhausen (DE)
(74) Vertreter: Lichti - Patentanwälte Partnerschaft mbB
(86) Internationale Anmeldenummer: PCT/EP2012/003508
(87) Internationale Veröffentlichungsnummer: WO 2013/034245

(56) Entgegenhaltungen:
- JP-A- 7 291 327
- US-A- 4 795 044
- US-A- 4 941 592
- US-A- 5 201 440
- US-A- 5 875 907
- US-A1- 2006 011 573
- US-A1- 2007 205 177
- US-A1- 2008 245 795
- US-B1- 6 269 986
- US-B1- 6 405 885

## Beschreibung

Die Erfindung betrifft einen Klappdeckelverschluss gemäß dem Oberbegriff des Anspruchs 1, wie aus US 5,875,907 A bekannt.

Darüber hinaus betrifft die Erfindung Verfahren zur Herstellung und Montage eines entsprechenden Klappdeckelverschlusses, wie in Ansprüchen 17 und 18 definiert.

Ein Klappdeckelverschluss der genannten Art dient üblicherweise dazu, eine Flasche, eine Tube oder einen sonstigen Behälter, in dem beispielsweise eine Creme, eine flüssige Seife, Zahnpasta oder ein sonstiges fließ- oder schüttfähiges Produkt enthalten sein kann, bei Bedarf in einfacher Weise zu öffnen, indem der Benutzer mit einem Finger derjenigen Hand, die den Behälter umfasst, das Betätigungsteil verstellt und dadurch den Deckel öffnet. Somit ist eine sogenannte Ein-Hand-Bedienung möglich, um den Deckel zu öffnen und Zugriff auf das in den Behälter befindliche Produkt zu erhalten. Ein anderer Klappdeckelverschluss ist in der EP 2 035 292 B1 dargestellt.

Ein derartiger Klappdeckelverschluss besitzt ein im wesentlichen zylindrisches Grundteil, an dem ein Deckel gelenkig angeschlossen ist. Im Inneren des Grundteils ist ein Betätigungsteil schwenkbar gelagert, auf das der Benutzer im geschlossenen Zustand des Klappdeckelverschlusses eine Druckkraft ausüben kann, wodurch das Betätigungsteil um eine Drehachse schwenkt und dabei den Deckel in seine Offenstellung nach oben drückt.

Das Grundteil, der Deckel und das Betätigungsteil sind als einstückiges Kunststoff-Spritzgussteil ausgebildet, wobei der Deckel über Gelenkbänder an das Grundteil angeschlossen ist.

Das Betätigungsteil ist über zwei auf verschiedenen Seiten angeordnete Torsionsstifte einstückig mit dem Grundteil verbunden. Die Torsionsstifte definieren die Schwenkachse des Betätigungsteils, wobei eine Rückstellkraft für das Betätigungsteil aus den inneren Spannungen der Torsionsstifte abgeleitet werden kann.

Das Betätigungsteil ist bei dem aus EP 2 035 292 B1 bekannten Klappdeckelverschluss auf der Oberseite des Grundteils nahe der Spenderöffnung angeordnet. Dies bringt den Nachteil mit sich, dass das Produkt bei Gebrauch in den Zwischenraum zwischen dem Grundteil und dem Betätigungsteil eintreten kann. Bei gewissen Produkten ist dies aus hygienischen Gründen nicht akzeptabel und es besteht die Gefahr, dass die Verstellbarkeit des Betätigungsteils relativ zu dem Grundteil durch anhaftende Produktreste behindert wird.
Darüber hinaus ist der bekannte Klappdeckelverschluss sehr aufwändig in der Herstellung, da für die Ausbildung der Torsionsstifte ein kompliziertes Werkzeug notwendig ist. Bei vielen Produkten ist es gewünscht, dass der Benutzer erkennt, dass der Klappdeckelverschluss bisher noch nicht geöffnet wurde. Ein derartiger sogenannter Originalitäts-Indikator muss bei dem bekannten Klappdeckelverschluss nachträglich angebracht werden, indem beispielsweise der Klappdeckelverschluss mit einer Folie überzogen wird. Dieses Vorgehen ist aufwändig und kostenintensiv.

In der schon erwähnten US 5,875,907 A ist ein Klappdeckelverschluss beschrieben, von dem im Oberbegriff des Anspruchs 1 ausgegangen wird. Der Klappdeckelverschluss weist ein Grundteil auf, an das ein Deckel über ein 1. Scharniergelenk angeschlossen ist. An dem Deckel ist über ein 2. Scharniergelenk eine Lasche angeschlossen, die im unbenutzten Ausgangszustand des Klappdeckelverschlusses unlösbar mit dem Grundteil verrastet ist. Um den Deckel zu öffnen, muss der Benutzer die Lasche eindrücken, wodurch die Verbindung zu dem Deckel abreißt. Somit ist ein Originalitäts-Indikator gegeben, durch den man sicher erkennen kann, ob der Klappdeckelverschluss vorher schon einmal geöffnet wurde oder nicht.
Aufgrund der Verrastung verbleibt die Lasche auch in ihrem eingedrückten Zustand mit dem Grundteil in Eingriff und ist in diesem Zustand durch eine zusätzliche Verrastung fixiert.
Um den Deckel nochmals zu öffnen, muss der Benutzer in den Spalt zwischen der Lasche und dem Rand des Deckels eingreifen und den Deckel anheben. Dabei besteht die Gefahr, dass sich an diesem Rand noch scharfe Kanten befinden, da der Deckel an diesem Rand vorher mit der Lasche verbunden war. Desweiteren ist es nachteilig, das zum Öffnen dieses Klappdeckelverschlusses zwei Hände benötigt werden. Gleichartige Klappdeckelverschlüsse sind auch aus der JP 07291327 A und der US 6,269,986 B1 bekannt.

Die US 2008/245795 A1 zeigt einen Klappdeckelverschluss mit einem Betätigungsteil in Form eines Öffnungsschiebers, der in einer Betätigungsstellung mit dem Deckel in Anlage steht. Der Öffnungsschieber ist als separates Bauteil gefertigt, was aufwändig ist und eine zeitintensive Montage notwendig macht.

Der Erfindung liegt die Aufgabe zugrunde, einen Klappdeckelverschluss der genannten Art zu schaffen, der einen integrierten Originalitäts-Indikator besitzt und sich in einfacher Weise öffnen lässt.

Darüber hinaus sollen Verfahren zur Herstellung und Montage eines entsprechenden Klappdeckelverschlusses geschaffen werden, die schnell und kostengünstig ausführbar sind.

Hinsichtlich des Klappdeckelverschlusses wird diese Aufgabe mit einem Klappdeckelverschluss mit den Merkmalen des Anspruchs 1 gelöst.

Auch dabei ist vorgesehen, dass das Betätigungsteil über zumindest einen als Sollbruchstelle dienenden flexiblen Steg mit dem Deckel verbunden ist, wobei der Steg bei der ersten Verstellung des Betätigungsteils in die Betätigungsposition zerstörbar ist.

Das Betätigungsteil ist verstellbar und vorzugsweise verschieblich an dem Grundteil gelagert. Wenn das Betätigungsteil von dem Benutzer in die Betätigungsposition verstellt wird, wirkt es auf den Deckel ein und löst diesen aus dem Eingriff mit dem Betätigungsteil und/oder dem Grundteil, woraufhin der Deckel vorzugsweise selbsttätig seine Offenstellung schwenkt. Dabei ist gemäß der Erfindung vorgesehen, dass das Betätigungsteil in seiner Betätigungsposition in zumindest einem Bereich und insbesondere in zumindest zwei voneinander beabstandeten Bereichen mit dem Deckel in Anlage steht und den Deckel dadurch in die Offenstellung beaufschlagt. Vorzugsweise wirkt das Betätigungsteil nahe oder an dem zumindest einen Gelenkband, mit dem der Deckel am Grundteil angebracht ist, auf den Deckel ein. Ein weiterer Bereich kann vorzugsweise am diametral gegenüberliegenden Ende des Deckels nahe der Fingerlauflage des Betätigungsteils vorgesehen sein.

Auch bei dem erfindungsgemäßen Klappdeckelverschluss sind der Deckel und das Betätigungsteil und vorzugsweise auch zusammen mit dem Grundteil als einstückiges Kunststoff-Spritzgussteil ausgebildet. Dabei ist das Betätigungsteil vorzugsweise ausschließlich über den flexiblen Steg mit dem Deckel verbunden. Sobald ein Benutzer das Betätigungsteil in dessen Betätigungsposition bringt, um den Deckel zu öffnen, wird der Steg zerstört. Auf diese Weise dient der Steg als Originalitäts-Indikator, der vom Benutzer in einfacher Weise wahrgenommen werden kann.

In bevorzugter Ausgestaltung der Erfindung ist vorgesehen, dass das Betätigungsteil allein über den Steg mit dem Deckel verbunden ist. Nach Zerstörung des Steges ist das Betätigungsteil von dem Deckel gelöst, wobei es jedoch an dem Grundteil verstellbar gehalten und somit schwimmend gelagert ist.

Vorzugsweise bildet der Steg ein Scharniergelenk, indem er beispielsweise bandartig ausgebildet ist. Auf diese Weise ist es möglich, das Betätigungsteil für die später im Detail dargestellte Montage des Klappdeckelverschlusses um den Steg zu schwenken und in die Montageposition zu bringen. Die Verbindung zwischen dem Deckel und dem Betätigungsteil über den Steg stellt dabei sicher, dass diese beiden Teile vor der Montage eine gewünschte relative Sollposition einnehmen.

In bevorzugter Ausgestaltung der Erfindung ist vorgesehen, dass der Steg im Randbereich auf der Außenseite des Deckels angeordnet ist. Auf diese Weise ist sichergestellt, dass der Steg von dem Benutzer in einfacher Weise wahrgenommen werden kann.

Vorzugsweise ist der Steg angrenzend an eine Fingerauflage des Betätigungsteils angeordnet. Der Benutzer legt an der Fingerauflage einen Finger auf, um auf das Betätigungsteil eine Verstellkraft auszuüben. Wenn der Steg unmittelbar angrenzend an der Fingerauflage angeordnet ist, ist dadurch sichergestellt, dass die vom Benutzer aufgebrachte Kraft auf kurzem Wege zu dem Steg geleitet wird und dort zu dessen Zerstörung führt. Darüber hinaus hat der Benutzer die Fingerauflage üblicherweise bei dem Öffnen des Klappdeckelverschlusses im Blick und kann somit sofort erkennen, ob der Steg bereits zerstört oder noch unbeschädigt ist.

Nachdem der Steg bei der ersten Verstellung des Betätigungsteils zerstört ist, ist das Betätigungsteil von dem

Deckel gelöst und frei relativ zu diesem verstellbar. Um eine definierte Verstellbewegung zu erzielen, ist in Weiterbildung der Erfindung vorgesehen, dass das Betätigungsteil verschieblich an dem Grundteil gelagert ist. Dies kann beispielsweise dadurch erreicht werden, dass das Betätigungsteil formschlüssig und insbesondere durch eine Verrastung an dem Grundteil gehalten ist. Das Betätigungs-teil lässt sich somit zwischen seiner Ruheposition und seiner Betätigungsposition in definierter Weise verstellen, wobei es an dem Grundteil gehalten und geführt ist.

In einer ersten Ausgestaltung kann vorgesehen sein, dass das Betätigungsteil innerhalb des als Gehäuse ausgestalteten Grundteils angeordnet und in diesem verschieblich gelagert ist. Alternativ ist es jedoch auch möglich, das Betätigungsteil gehäuseartig auszugestalten und das Grundteil innerhalb des Betätigungsteils anzuordnen. Bei dieser Ausgestaltung umgibt das Betätigungsteil somit das Grundteil und ist ebenfalls an diesem verschieblich gelagert.

Vorzugsweise ist der Deckel auch einstückig mit dem Grundteil verbunden, so dass das Grundteil, der Deckel und das Betätigungsteil als einstückiges Kunststoff-Spritzgussteil hergestellt werden können. Dabei ist insbesondere vorgesehen, dass der Deckel in an sich bekannter Weise über zumindest ein Gelenkband mit dem Grundteil verbunden ist, das ein Scharniergelenk bildet.

Zusätzlich oder alternativ dazu kann vorgesehen sein, dass der Deckel über zumindest eine Federlasche mit dem Grundteil verbunden ist.

Die Federlasche oder die Federlaschen können so dimensioniert und positioniert sein, dass sie auf den Deckel eine ihn in seine Offenstellung vorspannende Kraft aufbringen. Dies hat zur Folge, dass der Deckel selbsttätig in seine Offenstellung schwenkt, sobald er durch Betätigung des Betätigungsteils von dem Grundteil gelöst ist.

Vorzugsweise ist die Federlasche so dimensioniert und ausgerichtet, dass sie nach Art eines federbelasteten Kniehebels je nach Verformungszustand eine Federkraft in unterschiedliche Richtung ausübt. Wenn der Deckel aus seiner Verschlussstellung in Richtung der Offenstellung verschoben wird, ist zunächst die Federkraft der Federlasche zu überwinden, die den Deckel in die Verschlussstellung beaufschlagt. Wenn an einem sogenannten Umschaltpunkt eine bestimmte Verformung der Federlasche erreicht ist, wirkt die Federkraft der Federlasche in die Gegenrichtung, d.h. in die Offenstellung des Deckels. Auf diese Weise unterstützt die Federlasche sowohl die Öffnungsbewegung des Deckels, indem sie den Deckel nach Erreichen des Umschaltpunktes zuverlässig in dessen Offenstellung bringt, als auch die Schließbewegung des Deckels, indem sie den Deckel nach Erreichen des Umschaltpunktes in die Verschlussstellung beaufschlagt.

Der Deckel kann in seiner Verschlussstellung auf dem Grundteil entweder kraftschlüssig durch Reibung oder Klemmung oder formschlüssig gehalten sein. Dabei kann vorgesehen sein, dass der Deckel in seiner Verschlussstellung formschlüssig mit dem Betätigungsteil in Eingriff steht. Zu diesem Zweck kann der Deckel ein erstes Ein-griffsteil aufweisen, das in der Verschlussstellung des Deckels mit einem zweiten Eingriffsteil des Betätigungsteils in Eingriff gebracht werden kann. Beispielsweise kann der Deckel zumindest einen Ansatz aufweisen, der das Grundteil in der Verschlussstellung des Deckels an einem Durchbruch durchgreift. Wenn der Benutzer das Betätigungsteil betätigt, können die beiden Eingriffsteile außer Eingriff gebracht werden, so dass der Deckel aus seiner formschlüssigen Halterung am Betätigungsteil frei kommt und in die Offenstellung verstellt werden kann.

Das Grundteil weist in einer möglichen Ausgestaltung eine zylindrische Grundform und insbesondere eine kreiszylindrische Grundform auf. Es kann vorgesehen sein, dass das Grundteil und das Betätigungsteil an diametral gegenüberliegenden Abschnitten des Deckels mit diesem verbunden sind.

In bevorzugter Ausgestaltung der Erfindung kann vorgesehen sein, dass das Grundteil haubenförmig ausgestaltet ist und eine Oberseite sowie eine umlaufende Mantelfläche besitzt. In der Mantelfläche kann eine Aussparung vorgesehen sein, an der das Betätigungsteil, das im montierten Zustand weitestgehend im Inneren des Grundteils angeordnet ist, die Wandung des Grundteils mit seiner Fingerauflage durchgreift.

Alternativ kann vorgesehen sein, dass das Betätigungsteil gehäuseförmig ausgebildet ist und dass das Grundteil in dem Betätigungsteil angeordnet ist. Auch hierbei können der Deckel und das Betätigungsteil an diametral gegenüberliegenden Abschnitten des Grundteils mit diesem verbunden sein. Bei dieser Ausgestaltung ist in einer umlaufenden Mantelfläche des Betätigungsteils eine Aussparung vorgesehen, an der das Grundteil, das im montierten Zustand weitestgehend im Inneren des Betätigungsteils angeordnet ist, die Wandung des Betätigungsteils mit einem Abschnitt durchgreift.

Hinsichtlich des Verfahrens wird die oben genannte Aufgabe in einer 1. Ausgestaltung (Anspruch 17) durch ein Verfahren zur Herstellung und Montage eines Klappdeckelverschlusses genannten Aufbaus mit den folgenden Schritten gelöst:
Zunächst werden das Grundteil, der Deckel und das Betätigungsteil als einstückiges Kunststoff-Spritzgussteil hergestellt, wobei das Betätigungsteil außerhalb des Grundteils angeordnet ist und mit dem Deckel über einen flexiblen Steg verbunden ist. An dem zu dem Steg diametral gegenüberliegenden Ende des Deckels ist das Grundteil über das zumindest eine Gelenkband angeformt, so dass das Betätigungsteil, der Deckel und das Grundteil in dieser Reihenfolge in Reihe angeordnet sind.

Nachdem das Kunststoff-Spritzgussteil eine ausreichende Stabilität besitzt, wird zunächst der Deckel mit dem angehängten Betätigungsteil relativ zu dem Grundteil so um das Gelenkband und/oder die Federlasche geschwenkt, dass der Deckel sich in seiner Verschlussstellung auf dem Grundteil befindet, wobei das Betätigungsteil neben dem Grundteil angeordnet ist. Anschließend wird das Betätigungsteil so um den Steg geschwenkt, dass es von unten in den Innenraum des napf- oder haubenförmigen Grundteils eintritt und dort angeordnet ist, wobei die Mantelfläche des Grundteils an einer Aussparung von dem Betätigungsteil durchgriffen ist. Vorzugsweise wird das Betätigungsteil innerhalb des Grundteils so gehalten, dass es aus diesem nicht herausfallen kann. Dies kann beispielsweise dadurch erreicht werden, dass das Betätigungsteil in dem Grundteil verrastet wird. Dabei ist die Verrastung so ausgelegt, dass das Betätigungsteil in dem Grundteil verschieblich gehalten ist.

Eine 2. Ausgestaltung des Verfahrens (Anspruch 18) weist die folgenden Schritte auf:
Die Herstellung des Klappdeckelveschlusses als einstückiges Kunststoff-Spritzgussteil geschieht in oben genannter Weise. Nachdem das Kunststoff-Spritzgussteil eine aus-reichende Stabilität besitzt, wird zunächst der Deckel mit dem angehängten Betätigungsteil relativ zu dem Grundteil so um das Gelenkband und/oder die Federlasche geschwenkt, dass der Deckel sich in seiner Verschlussstellung auf dem Grund-teil befindet, wobei das Betätigungsteil neben dem Grund-teil angeordnet ist. Anschließend wird das Betätigungsteil so um den Steg geschwenkt, dass es von unten um das Grund-teil herum angeordnet wird, d.h. das Grundteil im Innenraum des gehäuseförmigen Betätigungsteils angeordnet ist, wobei die Mantelfläche des Betätigungsteils an einer Aussparung von dem Grundteil durchgriffen ist. Dabei werden das Betätigungsteil und das Grundteil relativ zueinander beispielsweise mittels einer Verrastung so gehalten, dass sie sich nicht voneinander lösen, wobei das Betätigungsteil verschieblich an dem Grundteil gehalten ist.

Um für die Schwenkbewegungen des Deckels und auch des Betätigungsteils einen ausreichenden Bauraum zu haben, ist vorzugsweise vorgesehen, dass das Grundteil und das Betätigungsteil an diametral gegenüberliegenden Abschnitten des Deckels mit diesem verbunden werden.

Weitere Merkmale des erfindungsgemäßen Verfahrens ergeben sich aus der vorgenannten und/oder folgenden Beschreibung des erfindungsgemäßen Klappdeckelverschlusses.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: Eine perspektivische Vorderansicht eines Klappdeckelverschlusses gemäß einem 1. Ausführungsbeispiel vor der Montage,
- Fig. 2: eine perspektivische Rückansicht des Klappdeckelverschlusses gemäß Figur 1,
- Fig. 3: eine perspektivische Aufsicht des Klappdeckelverschlusses nach der Montage,
- Fig. 4: eine perspektivische Unteransicht des Klappdeckelverschlusses gemäß Figur 3,
- Fig. 5: einen Vertikalschnitt durch den Klappdeckelverschluss gemäß Figur 3,
- Fig. 6: eine perspektivische Vorderansicht eines Klappdeckelverschlusses gemäß einem 2. Ausführungsbeispiel vor der Montage,
- Fig. 7: eine perspektivische Rückansicht des Klappdeckelverschlusses gemäß Figur 6,
- Fig. 8: eine perspektivische Aufsicht des Klappdeckelverschlusses nach der Montage,
- Fig. 9: eine perspektivische Unteransicht des Klappdeckelverschlusses gemäß Figur 8 und
- Fig. 10: einen Vertikalschnitt durch den Klappdeckelverschluss gemäß Figur 7.

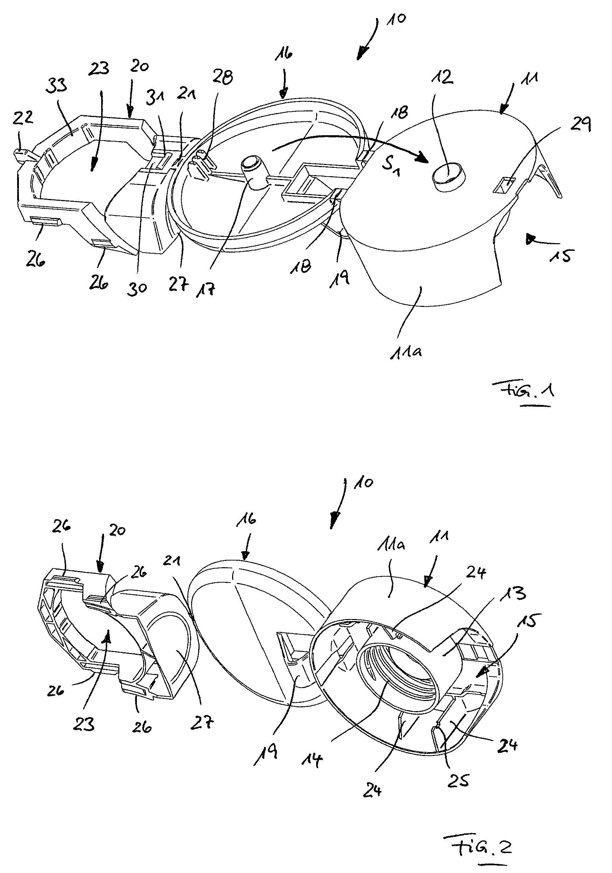

Die Figuren 1 und 2 zeigen einen Klappdeckelverschluss 10 nach seiner Herstellung als einstückiges Kunststoff-Spritzgussteil. Der Klappdeckelverschluss 10 umfasst einen mittigen Deckel 16, an den in diametral gegenüberliegenden Bereichen ein Grundteil 11 und ein Betätigungsteil 20 angeschlossen sind.

Das Grundteil 11 besitzt eine haubenförmige Grundform und weist auf seiner Oberseite eine Spenderöffnung 12 auf. Desweiteren ist auf der Oberseite ein Durchbruch 29 ausgebildet, in den ein Ansatz 28 des Deckels 16 eingreifen kann. Bis auf die Spenderöffnung 12 und den Durchbruch 29 besitzt die Oberseite des Grundteils 11 eine glatte, unstrukturierte Oberfläche, so dass eine Verschmutzung oder Funktionsbeeinträchtigung des Klappdeckelverschlusses 10 durch Produktreste weitestgehend vermieden ist.

Das Grundteil 11 weist des weiteren eine umlaufende Mantelfläche 11a auf, die auf der dem Deckel 16 abgewandten Seite eine Aussparung 15 besitzt.

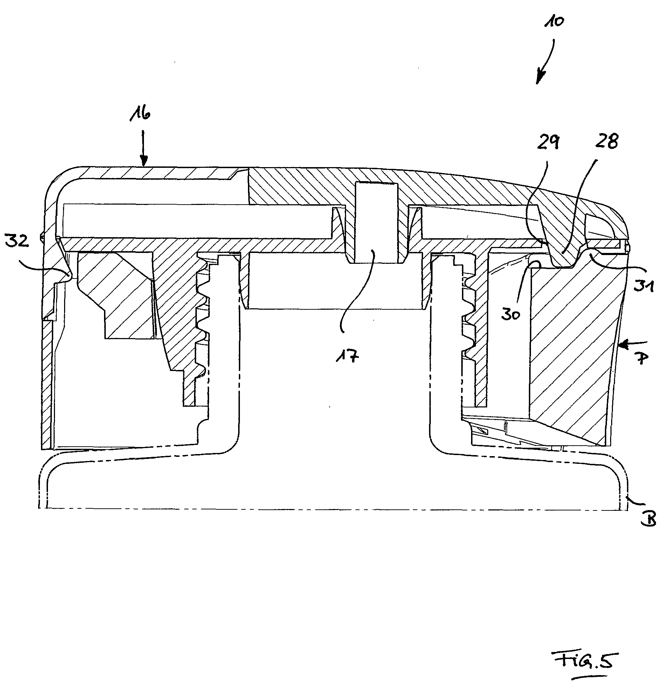

Im Inneren des Grundteils 11 ist ein mittiger, stutzenförmiger Ansatz 13 angeformt, der ein Innengewinde 14 besitzt, mit dem der Klappdeckelverschluss 11 auf einen nur gestrichelt dargestellten Behälter B (siehe Fig. 5) aufgeschraubt werden kann. Alternativ ist es auch möglich, den Klappdeckelverschluss 11 auf den Behälter B aufzurasten oder aufzuprellen.

Auf der Innenseite der Mantelfläche 11a des Grundteils 11 sind mehrere zum Zentrum des Grundteils 11 hervorstehende Rippen 24 angeformt, die jeweils eine Rastausnehmung 25 aufweisen.

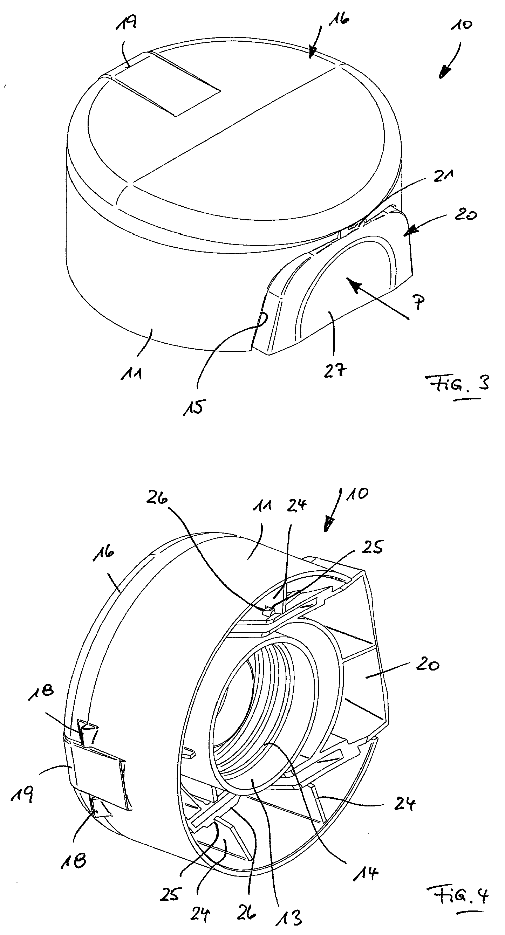

In einem Umfangsbereichs des Grundteils 11 ist der Deckel 16 über zwei in Umfangsrichtung des Grundteils 11 von-einander beabstandete Gelenkbänder 18 einstückig ange-schlossen. Zwischen den Gelenkbändern 18 ist eine ebenfalls einstückig ausgebildete, bandförmige Federlasche 19 vorge-sehen. Wenn der Deckel 16 aus der in den Figuren 1 und 2 dargestellten Offenstellung, in der er neben dem Grundteil 11 angeordnet ist, in die in den Figuren 3 bis 5 darge-stellte Verschlussstellung geschwenkt wird, in der er auf dem Grundteil 11 angeordnet ist, bauen sich in der Feder-lasche 19 innere Spannungen auf, die den Deckel 16 bis zum Erreichen eines Umschaltpunktes in seine Offenstellung und nach Überschreiten des Umschaltpunktes in seine Verschlussstellung beaufschlagen.

Der Deckel 16 ist im wesentlichen haubenförmig ausgebildet und besitzt auf seiner in der Verschlussstellung dem Grundteil 11 zugewandten Unterseite einen Stopfen 17, der in der Verschlussstellung in die Spenderöffnung 12 eingreift und diese verschließt (siehe Figur 5). Ferner ist versetzt zu dem Stopfen 17 an dem Deckel der Ansatz 28 angeformt, der in der Verschlussstellung des Deckels 16 den Durchbruch 29 auf der Oberseite des Grundteils 11 durchgreift und mit seinem vorderen Ende in den Innenraum des Grundteils 11 hervorsteht.

Die Federlasche 19 besitzt auf ihrer inneren, in der Verschlussstellung des Deckels 16 dem Grundteil 11 zugewandten Oberfläche einen Vorsprung 32 (siehe Figur 5), der in der Verschlussstellung des Deckels 16 um ein geringes Maß in den Innenraum des Grundteils 11 hervorsteht.

An dem dem Grundteil 11 diametral gegenüberliegenden Bereich des Deckels 16 ist das Betätigungsteil 20 ange-formt. Das Betätigungsteil 20 steht allein über einen als Scharniergelenk wirkenden Steg 21, der am Rand des Deckels 16 angeschlossen ist, mit dem Deckel 16 in Verbindung. Das Betätigungsteil 20 besitzt einen als Fingerauflage 27 dienenden Korpus, der nahe dem Deckel 16 angeordnet ist und auf seiner Oberseite eine Vertiefung 30 mit einer benachbarten Schubkuppe 31 aufweist.

An dem dem Deckel 16 abgewandten Ende der Fingerauflage 27 ist das Betätigungsteil 20 als Rahmen 33 ausgebildet, der eine mittlere Ausnehmung 23 umgibt. Auf der der mittleren Ausnehmung 23 abgewandten Außenseite des Rahmens 33 sind mehrere leistenförmige Rastvorsprünge 26 angeformt.

An seinem dem Steg 21 abgewandten Ende besitzt das Betätigungsteil 20 eine Schubplatte 22, die in die dem Deckel 16 abgewandte Richtung hervorsteht.

Im Folgenden soll die Herstellung und Montage des Klappdeckelverschlusses 10 beschrieben werden. Der Klappdeckelverschluss 10 wird in der in den Figuren 1 und 2 dargestellten Weise als einstückiges Kunststoff-Spritzgussteil hergestellt, wobei das Betätigungsteil 20, der Deckel 16 und das Grundteil 11 in dieser Reihenfolge einstücking hintereinander angeordnet sind. Zur Montage des Klappdeckelverschlusses 10 wird zunächst der Deckel 16 um die Gelenkbänder 18 verschwenkt (siehe Pfeil S₁ in Figur 1), so dass der Deckel 16 auf der Oberseite des Grundteils 11 zu liegen kommt. In dieser Verschlussstellung (siehe Figur 5) ist der Stopfen 17 in die Spenderöffnung 12 einge-führt und verschließt diese. Der Ansatz 28 durchgreift den Durchbruch 29 auf der Oberseite des Grundteils 11.

Anschließend wird das Betätigungsteil 20 um den Steg 21 so geschwenkt, dass es durch die Aussparung 15 in der Mantelfläche 11a des Grundteils 11 von unten in den Innenraum des Grundteils 11 eintritt. Der Rahmen 33 umgreift dabei den stutzenförmigen Ansatz 13 des Grundteils 11 und die Rastvorsprünge 26 des Betätigungsteils 20 treten mit den Rastausnehmungen 25 der Rippen 24 des Grundteils 11 in Eingriff. Auf diese Weise kann das Betätigungsteil 20 nicht mehr aus dem Grundteil 11 herausfallen. Die Verrastung zwischen dem Betätigungsteil 20 und dem Grundteil 11 ist so gewählt, dass sie eine Verstellung oder Verschiebung des Betätigungsteils 20 in linearer Richtung des Grundteils 11 zulässt, woran das Betätigungsteil 20 jedoch durch den Steg 21 zunächst gehindert ist. In dieser montierten Stellung ist die Vertiefung 30 des Betätigungsteils 20 unterhalb des Durchbruchs 29 des Grundteils 11 positioniert, in die der Ansatz 28 eingreift.

Die Schubkuppe 31 des Betätigungsteils 20 liegt in diesem Zustand nahe dem Ansatz 28 und die Schubplatte 22 des Betätigungsteils 20 liegt in unmittelbarer Nähe des Vorsprungs 32 der Federlasche 19, wie es in Figur 5 dargestellt ist.

Der Klappdeckelverschluss 10 kann dann auf einen Behälter aufgeschraubt oder aufgeprellt werden, nachdem dieser mit einem Produkt gefüllt ist.

Wenn ein Benutzer den auf einen Behälter aufgesetzten Klappdeckelverschluss 10 öffnen möchte, drückt er von der Außenseite auf die seitlich aus dem Grundteil 11 hervorstehende Fingerauflage 27 des Betätigungsteils 20, wodurch auf dieses eine radial nach innen gerichtete Kraft P (siehe Figuren 3 und 5) ausgeübt wird. Aufgrund dieser Kraft P reißt der Steg 21, über den das Betätigungsteil 20 mit dem Deckel 16 verbunden ist. Dadurch kommt das Betätigungsteil 20 von dem Deckel 16 frei und kann in dem Grundteil 11 verschoben werden. Eine entsprechende Verschiebung des Betätigungsteils 20 bewirkt, dass zunächst die Schubkuppe 31 mit dem Ansatz 28 des Deckels 16 in Anlage kommt und diesen nach oben aus dem Durchbruch 29 des Grundteils 11 herausdrückt. Unmittelbar anschließend kommt die Schubplatte 22 des Betätigungsteils 20 mit dem Vorsprung 32 der Federlasche 19 in Anlage und übt auf diese eine Kraft in Richtung der Offenstellung des Deckels 16 aus. Die Verschiebung des Betätigungsteils 20 bewirkt somit eine anfängliche Schwenkung des Deckels 16 in Richtung seiner Offenstellung, wobei der Stopfen 17 des Deckels 16 aus der Spenderöffnung 12 des Grundteils 11 nach oben herausgezogen wird. Sobald der Deckel 16 den Umschaltpunkt der Federkraft der Federlasche 19 überschritten hat, schwenkt er infolge der inneren Kraft der Federlasche 19 in seine Offenstellung.

Da der Steg 21 zwischen dem Betätigungsteil 20 und dem Deckel 16 bei der ersten Betätigung des Betätigungsteils 20 abreißt, dient er auch als Originalitäts-Indikator, so dass der Benutzer jederzeit sehen kann, ob das Betätigungsteil 20 schon einmal verschoben und somit der Deckel 16 bereits geöffnet wurde.

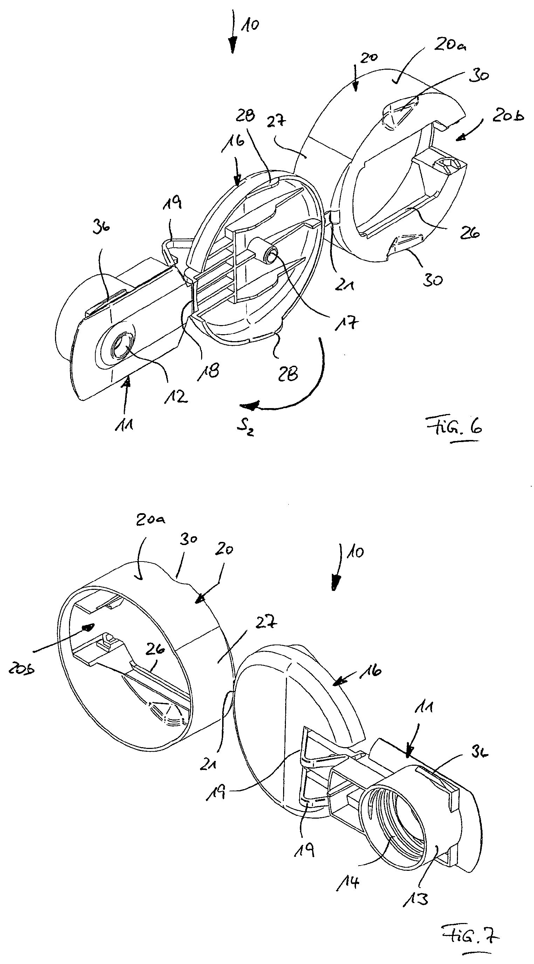

In den Figuren 6 bis 10 ist eine 2. Ausführungsform des Klappdeckelverschlusses 10 dargestellt. Dabei sind mit der 1. Ausführungsform identische oder zunächst funktional gleichwirkende Bauteile mit den gleichen Bezugszeichen wie in den Fig. 1 bis 5 versehen, auf deren Beschreibung hiermit verwiesen wird.

Auch bei der 2. Ausführungsform ist der Klappdeckelverschluss 10 als einstückiges Kunststoff-Spritzgussteil hergestellt und umfasst den mittigen Deckel 16, an dem in diametral gegenüberliegenden Bereichen das Grundteil 11 und das Betätigungsteil 20 angeschlossen sind. In Abwandlung zu dem 1. Ausführungsbeispiel besitzt das Grundteil eine kompakte, kastenförmige Grundform und trägt auf seiner Außenseite schienenartige Rastvorsprünge 36.

An einem Ende des Deckels 16 ist das Grundteil 11 über das Gelenkband 18 einstückig angeschlossen, das als Scharniergelenk wirkt. Nahe dem Gelenkband 18 sind zwei Federlaschen 19 angeformt, die den Deckel 16 in genannter Weise in Abhängigkeit von dessen Schwenkstellung in die Offenstellung oder die Verschlussstellung beaufschlagen. Der Deckel 16 kann in vorgenannter Weise mit seinem Stopfen 17 in die Spenderöffnung 12 des Grundteils eingeführt werden. Desweiteren sind an dem Deckel 16 seitliche Ansätze 28 angeformt, die in der Verschlussstellung des Deckels 16 in Richtung des Betätigungsteils 20 hervorstehen und in dort ausgebildete Vertiefungen 30 eingreifen.

An dem dem Grundteil 11 diametral gegenüberliegenden Bereich des Deckels 16 ist das Betätigungsteil 20 angeformt und steht über den als Scharniergelenk wirkenden Steg 21 mit dem Grundteil 11 in Verbindung. In Abwandlung zu dem 1. Ausführungsbeispiel ist das Betätigungsteil 20 gehäuseförmig mit einer kreiszylindrischen Grundform ausgebildet, wobei in der Mantelfläche 20a des Betätigungsteils 20 eine Aussparung 20b ausgebildet ist.

Im Inneren des Betätigungsteils 20 sind ebenfalls mehrere leistenförmige Rastvorsprünge 26 angeformt, die mit den schienenartigen Rastvorsprüngen 36 des Grundteils verrastbar sind.

Nachdem der Klappdeckelverschluss 10 als einstückiges Kunststoff-Spritzgussteil hergestellt ist, wird der Deckel in seine Verschlussstellung auf dem Grundteil 11 gebracht, indem er um das Gelenkband 18 geschwenkt (s. Pfeil S₂ in Fig. 6) und auf das Grundteil 11 aufgesetzt wird, wobei sein Stopfen 17 in die Spenderöffnung 12 eintritt und diese verschließt. Anschließend wird das Betätigungsteil 20 zur Montage um den Steg 21 so geschwenkt, dass das Grundteil 11 in den Innenraum des Betätigungsteils 20 eintritt und das gehäuseartige Betätigungsteil 20 das Grundteil 11 im Inneren aufnimmt und umgibt. Dabei treten die Rastvor-sprünge 26 mit den Rastvorsprüngen 36 in Eingriff, so dass eine Verstellung oder Verschiebung des Betätigungsteils 20 relativ zum Grundteil 11 möglich ist, wobei diese Verstellung jedoch durch den Steg 21 verhindert ist, solange dieser nicht zerbrochen ist.

Der Klappdeckelverschluss 10 kann dann auf den Behälter B aufgesetzt werden, nachdem dieser mit einem Produkt befüllt ist.

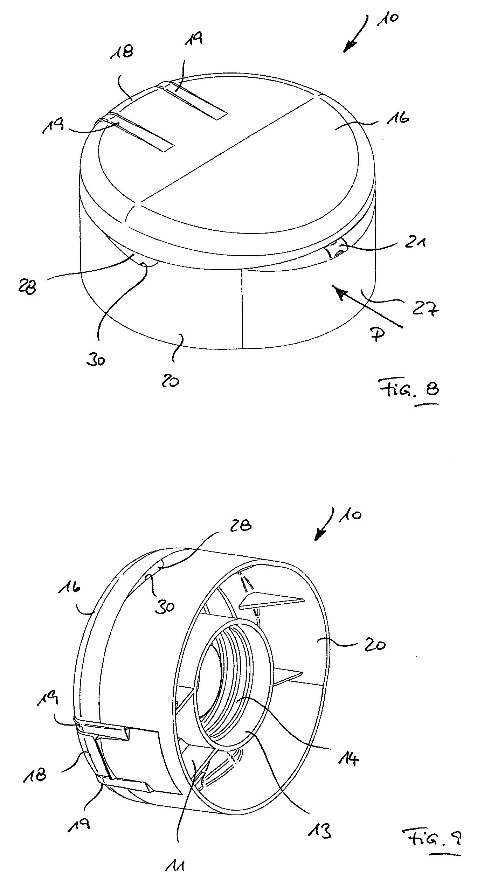

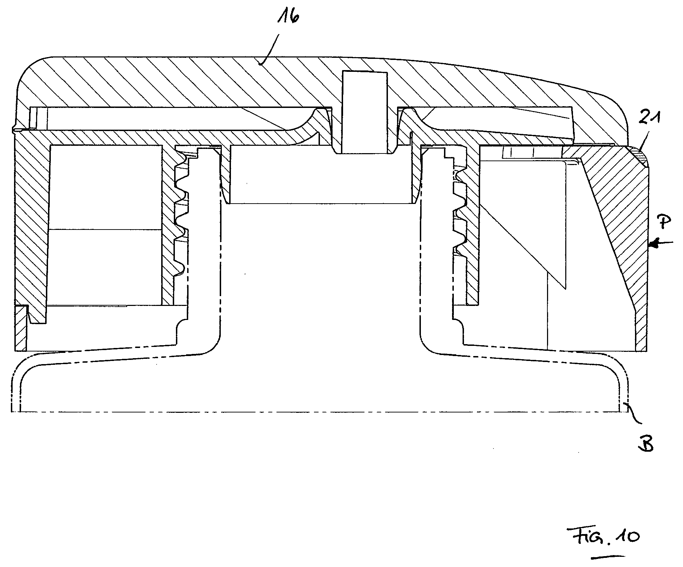

Wenn der Benutzer erstmalig an der Fingerauflage 27 eine Kraft P (siehe Figuren 8 und 10) aufbringt, reißt der Steg 21, so dass das Betätigungsteil 20 von dem Deckel 16 frei kommt. Bei einer weiteren Bewegung des Betätigungsteils 20 und durch Anlage der Ansätze 28 des Deckels 16 mit den Vertiefungen 30 des Betätigungsteils 20 wird der Deckel 16 von dem Betätigungsteil 20 abgehoben und schwenkt aufgrund der Federwirkung der Federlaschen 19 aus seiner Verschlussstellung in seine Offenstellung, wobei der Stopfen 17 des Deckels 16 aus der Spenderöffnung 12 herausgezogen wird und die Spenderöffnung 12 freigibt.

## Patentansprüche

1. Klappdeckelverschluss (10) aus Kunststoff zum Aufsetzen auf einen Behälter (B), mit einem Grundteil (11), das eine Spenderöffnung (12) besitzt, einem Deckel (16), der schwenkbar an dem Grundteil (11) gelagert ist und in einer auf dem Grundteil (11) aufliegenden Verschlussstellung die Spenderöffnung (12) verschließt, und einem Betätigungsteil (20), das zwischen einer Ruheposition und einer Betätigungsposition verstellbar an dem Grundteil (11) gelagert ist, wobei der Deckel (16) bei Betätigung des Betätigungsteils (20) aus der Verschlussstellung in Richtung einer Offenstellung verstellbar ist, wobei das Betätigungsteil (20) über zumindest einen als Sollbruchstelle dienenden flexiblen Steg (21) mit dem Deckel (16) verbunden ist, wobei der Steg (21) bei der ersten Verstellung des Betätigungsteils (20) in die Betätigungsposition zerstörbar ist, **dadurch gekennzeichnet, dass** das Betätigungsteil (20) in seiner Betätigungsposition mit dem Deckel (16) in Anlage steht und den Deckel (16) in die Offenstellung beaufschlagt.

2. Klappdeckelverschluss nach Anspruch 1, **dadurch gekennzeichnet, dass** das Betätigungsteil (20) nur über den Steg mit dem Deckel (16) verbunden ist.

3. Klappdeckelverschluss nach Anspruch 1 oder 2, **dadurch gekennzeichnet, dass** der Steg (21) ein Scharniergelenk bildet.

4. Klappdeckelverschluss nach einem der Ansprüche 1 bis 3, **dadurch gekennzeichnet, dass** der Steg (21) auf der Außenseite des Deckels (16) angeordnet ist.

5. Klappdeckelverschluss nach einem der Ansprüche 1 bis 4, **dadurch gekennzeichnet, dass** der Steg (21) angrenzend an eine Fingerauflage (27) des Betätigungsteils (20) angeordnet ist.

6. Klappdeckelverschluss nach einem der Ansprüche 1 bis 5, **dadurch gekennzeichnet, dass** das Betätigungsteil (20) verschieblich an dem Grundteil (11) gelagert ist.

7. Klappdeckelverschluss nach einem der Ansprüche 1 bis 6, **dadurch gekennzeichnet, dass** das Betätigungsteil (20) formschlüssig an dem Grundteil (11) gelagert ist.

8. Klappdeckelverschluss nach Anspruch 7, **dadurch gekennzeichnet, dass** das Betätigungsteil (20) an dem Grundteil (11) verrastet ist.

9. Klappdeckelverschluss nach einem der Ansprüche 1 bis 8, **dadurch gekennzeichnet, dass** der Deckel (16) einstückig mit dem Grundteil (11) verbunden ist.

10. Klappdeckelverschluss nach einem der Ansprüche 1 bis 9, **dadurch gekennzeichnet, dass** der Deckel (16) über zumindest ein Gelenkband (18) mit dem Grundteil (11) verbunden ist.

11. Klappdeckelverschluss nach einem der Ansprüche 1 bis 10, **dadurch gekennzeichnet, dass** der Deckel (16) über zumindest eine Federlasche (19) mit dem Grundteil (11) verbunden ist.

12. Klappdeckelverschluss nach Anspruch 11, **dadurch gekennzeichnet, dass** die Federlasche (19) den Deckel (16) in dessen Offenstellung und/oder in dessen Verschlussstellung beaufschlagt.

13. Klappdeckelverschluss nach einem der Ansprüche 1 bis 12, **dadurch gekennzeichnet, dass** der Deckel (16) zumindest einen Ansatz (28) aufweist, der das Grundteil (11) in der Verschlussstellung des Deckels (16) an einem Durchbruch (29) durchgreift.

14. Klappdeckelverschluss nach einem der Ansprüche 1 bis 13, **dadurch gekennzeichnet, dass** das Grundteil (11) und das Betätigungsteil (20) an diametral gegenüberliegenden Abschnitten mit dem Deckel (16) verbunden sind.

15. Klappdeckelverschluss nach einem der Ansprüche 1 bis 14, **dadurch gekennzeichnet, dass** das Grundteil (11) haubenförmig ausgebildet ist und in seiner Mantelfläche (11a) eine Aussparung (15) aufweist, in der das Betätigungsteil (20) mit seiner Fingerauflage (27) angeordnet ist.

16. Klappdeckelverschluss nach einem der Ansprüche 1 bis 14, **dadurch gekennzeichnet, dass** das Betätigungsteil (20) gehäuseförmig ausgebildet ist und dass das Grundteil (11) in dem Betätigungsteil (20) angeordnet ist.

17. Verfahren zur Herstellung und Montage eines Klappdeckelverschlusses gemäß einem der vorhergehenden Ansprüche, wobei das Grundteil (11), der Deckel (16) und das Betätigungsteil (20) als einstückiges Kunststoff-Spritzgussteil hergestellt werden, wobei das Betätigungsteil (20) außerhalb des Grundteils (11) angeordnet ist und mit dem Deckel (16) über einen flexiblen Steg (21) verbunden ist, wobei der Deckel (16) in eine auf dem Grundteil (11) angeordnete Verschlussstellung gebracht (Pfeil S₁) und anschließend das Betätigungsteil (20) so um den Steg (21) geschwenkt wird, dass es im Innenraum des napf- oder haubenförmigen Grundteils (11) angeordnet ist und eine Mantelfläche (11a) des Grundteils (11) an einer Aussparung (15) durchgreift.

18. Verfahren zur Herstellung und Montage eines Klappdeckelverschlusses gemäß einem der vorhergehenden Ansprüche 1 - 16, wobei das Grundteil (11), der Deckel (16) und das Betätigungsteil (20) als einstückiges Kunststoff-Spritzgussteil hergestellt werden, wobei das Betätigungsteil (20) außerhalb des Grundteils (11) angeordnet ist und mit dem Deckel (16) über einen flexiblen Steg (21) verbunden ist, wobei der Deckel (16) in eine auf dem Grundteil (11) angeordnete Verschlussstellung gebracht (Pfeil S₂) und anschließend das Betätigungsteil (20) so um den Steg (21) geschwenkt wird, dass das Grundteil (11) im Innenraum des gehäuseförmigen Betätigungsteils (20) angeordnet ist, wobei das Grundteil (11) eine Mantelfläche (20a) des Betätigungsteils (20) an einer Aussparung (20b) durchgreift.

19. Verfahren nach Anspruch 17 oder 18, **dadurch gekennzeichnet, dass** das Betätigungsteil (20) mit dem Grundteil (11) so verrastet wird, dass es an diesem verschieblich gehalten ist.

20. Verfahren nach einem der Ansprüche 17 bis 19, **dadurch gekennzeichnet, dass** das Grundteil (11) und das Betätigungsteil (20) an diametral gegenüberliegenden Abschnitten mit dem Deckel (16) verbunden sind.

## Claims

1. Hinged closure lid (10) made of plastic for placing onto a container (B), with a main part (11) which has a dispenser opening (12), a lid (16) which is mounted pivotably on the main part (11) and, in a closure position resting on the main part (11), closes the dispenser opening (12), and an actuating part (20) which is mounted on the main part (11) so as to be adjustable between an inoperative position and an actuating position, wherein the lid (16) is adjustable from the closure position in the direction of an open position when the actuating part (20) is in the actuated, wherein the actuating part (20) is connected to the lid (16) via at least one flexible web (21) serving as a predetermined breaking point, wherein the web (21) is destructible when the actuating part (20) is first adjusted into the actuating position, **characterized in that** the actuating part (20), in the actuating position thereof, is in contact with the lid (16) and loads the lid (16) into the open position.

2. Hinged closure lid according to Claim 1, **characterized in that** the actuating part (20) is connected to the lid (16) only via the web.

3. Hinged closure lid according to Claim 1 or 2, **characterized in that** the web (21) forms a hinge joint.

4. Hinged closure lid according to one of Claims 1 to 3, **characterized in that** the web (21) is arranged on the outside of the lid (16).

5. Hinged closure lid according to one of Claims 1 to 4, **characterized in that** the web (21) is arranged adjacent to a finger rest (27) of the actuating part (20).

6. Hinged closure lid according to one of Claims 1 to 5, **characterized in that** the actuating part (20) is mounted displaceably on the main part (11).

7. Hinged closure lid according to one of Claims 1 to 6, **characterized in that** the actuating part (20) is mounted in a form-fitting manner on the main part (11).

8. Hinged closure lid according to Claim 7, **characterized in that** the actuating part (20) is latched to the main part (11).

9. Hinged closure lid according to one of Claims 1 to 8, **characterized in that** the lid (16) is integrally connected to the main part (11).

10. Hinged closure lid according to one of Claims 1 to 9, **characterized in that** the lid (16) is connected to the main part (11) via at least one strap hinge (18).

11. Hinged closure lid according to one of Claims 1 to 10, **characterized in that** the lid (16) is connected to the main part (11) via at least one spring shackle (19).

12. Hinged closure lid according to Claim 11, **characterized in that** the spring shackle (19) loads the lid (16) into the open position thereof and/or into the closure position thereof.

13. Hinged closure lid according to one of Claims 1 to 12, **characterized in that** the lid (16) has at least one extension (28) which reaches through the main part (11) by way of an aperture (29) in the closure position of the 11d (16).

14. Hinged closure lid according to one of Claims 1 to 13, **characterized in that** the main part (11) and the actuating part (20) are connected at diametrically opposite sections to the lid (16).

15. Hinged closure lid according to one of Claims 1 to 14, **characterized in that** the main part (11) is of hood-shape design and, in the circumferential surface (11a) thereof, has a cut-out (15), in which the actuating part (20) together with the finger rest (27) thereof is arranged.

16. Hinged closure lid according to one of Claims 1 to 14, **characterized in that** the actuating part (20) is of housing-shape design, and **in that** the main part (11) is arranged in the actuating part (20).

17. Method for producing and installing a hinged closure lid according to one of the preceding claims, wherein the main part (11), the lid (16) and the actuating part (20) are produced as a single-piece injection-moulded plastics part, wherein the actuating part (20) is arranged outside the main part (11) and is connected to the lid (16) via a flexible web (21), wherein the lid (16) is brought (arrow S₁) into a closure position arranged in the main part (11) and the actuating part (20) is subsequently pivoted about the web (21) in such a manner that said actuating part (20) is arranged in the interior of the cup- or hood-shaped main part (11) and reaches through a circumferential surface (11a) of the main part (11) by way of a cut-out (15).

18. Method for producing and installing a hinged closure lid according to claims 1 - 16, wherein the main part (11), the lid (16) and the actuating part (20) are produced as a single-piece injection-moulded plastics part, wherein the actuating part (20) is arranged outside the main part (11) and is connected to the lid (16) via a flexible web (21), wherein the lid (16) is brought (arrow S₂) into a closure position arranged on the main part (11) and the actuating part (20) is subsequently pivoted about the web (21) in such a manner that the main part (11) is arranged in the interior of the housing-shaped actuating part (20), wherein the main part (11) reaches through a circumferential surface (20a) of the actuating part (20) by way of a cut-out (20b).

19. Method according to Claim 17 or 18, **characterized in that** the actuating part (20) is latched to the main part (11) in such a manner that said actuating part is held displaceably thereon.

20. Method according to one of Claims 17 to 19, **characterized in that** the main part (11) and the actuating part (20) are connected at diametrically opposite sections to the lid (16).

## Revendications

1. Fermeture sous forme de bouchon à charnière (10) en matière plastique à placer sur un conteneur (B), avec une partie de fond (11) possédant une ouverture distributrice (12), avec un bouchon (16), disposé de façon à pouvoir basculer au niveau de la partie de fond (11) et fermant, dans une position de fermeture reposant sur la partie de fond (11), l'ouverture distributrice (12) et avec une partie d'actionnement (20) disposée de façon à pouvoir être déplacée entre une position de repos et une position d'actionnement au niveau de la partie de fond (11), le bouchon (16) pouvant être déplacé lors de l'actionnement de la partie d'actionnement (20) de la position de fermeture en direction d'une position ouverte, la partie d'actionnement (20) étant reliée au bouchon (16) via au moins un étai (21) flexible servant de point de rupture théorique, l'étai (21) pouvant être détruit lors du premier déplacement de la partie d'actionnement (20) dans la position d'actionnement, **caractérisée en ce que** la partie d'actionnement (20) est en contact dans sa position d'actionnement avec le bouchon (16) et sollicite le bouchon (16) dans la position ouverte.

2. Fermeture sous forme de bouchon à charnière selon la revendication 1, **caractérisée en ce que** la partie d'actionnement (20) n'est reliée au bouchon (16) que via l'étai.

3. Fermeture sous forme de bouchon à charnière selon la revendication 1 ou 2, **caractérisée en ce que** l'étai (21) forme une articulation à charnière.

4. Fermeture sous forme de bouchon à charnière selon l'une quelconque des revendications 1 à 3, **caractérisée en ce que** l'étai (21) est disposé sur le côté extérieur du bouchon (16).

5. Fermeture sous forme de bouchon à charnière selon l'une quelconque des revendications 1 à 4, **caractérisée en ce que** l'étai (21) est disposé à la limite d'une surface d'appui de doigt (27) de la partie d'actionnement (20).

6. Fermeture sous forme de bouchon à charnière selon l'une quelconque des revendications 1 à 5, **caractérisée en ce que** la partie d'actionnement (20) est disposée de façon mobile au niveau de la partie de fond (11).

7. Fermeture sous forme de bouchon à charnière selon l'une quelconque des revendications 1 à 6, **caractérisée en ce que** la partie d'actionnement (20) est disposée par complémentarité de formes au niveau de la partie de fond (11).

8. Fermeture sous forme de bouchon à charnière selon la revendication 7, **caractérisée en ce que** la partie d'actionnement (20) est encliquetée au niveau de la partie de fond (11).

9. Fermeture sous forme de bouchon à charnière selon l'une quelconque des revendications 1 à 8, **caractérisée en ce que** le bouchon (16) est relié d'un seul tenant à la partie de fond (11).

10. Fermeture sous forme de bouchon à charnière selon l'une quelconque des revendications 1 à 9, **caractérisée en ce que** le bouchon (16) est relié à la partie de fond (11) via au moins un lien articulé (18).

11. Fermeture sous forme de bouchon à charnière selon l'une quelconque des revendications 1 à 10, **caractérisée en ce que** le bouchon (16) est relié à la partie de fond (11) via au moins une bride élastique (19).

12. Fermeture sous forme de bouchon à charnière selon la revendication 11, **caractérisée en ce que** la bride élastique (19) sollicite le bouchon (16) dans sa position ouverte et/ou dans sa position de fermeture.

13. Fermeture sous forme de bouchon à charnière selon l'une quelconque des revendications 1 à 12, **caractérisée en ce que** le bouchon (16) comporte au moins un appendice (28) agrippant la partie de fond (11) dans la position de fermeture du bouchon (16) au niveau d'un passage traversant (29).

14. Fermeture sous forme de bouchon à charnière selon l'une quelconque des revendications 1 à 13, **caractérisée en ce que** la partie de fond (11) et la partie d'actionnement (20) sont reliées au bouchon (16) au niveau de sections diamétralement opposées.

15. Fermeture sous forme de bouchon à charnière selon l'une quelconque des revendications 1 à 14, **caractérisée en ce que** la partie de fond (11) est réalisée en forme de calotte et comporte dans sa surface d'enveloppe (11a) un évidement (15) dans lequel est disposée la partie d'actionnement (20) avec sa surface d'appui de doigt (27).

16. Fermeture sous forme de bouchon à charnière selon l'une quelconque des revendications 1 à 14, **caractérisée en ce que** la partie d'actionnement (20) est réalisée sous la forme d'un carter et que la partie de fond (11) est disposée dans la partie d'actionnement (20).

17. Procédé de fabrication et de montage d'une fermeture sous forme de bouchon à charnière selon l'une quelconque des revendications précédentes, la partie de fond (11), le bouchon (16) et la partie d'actionnement (20) étant fabriquées sous la forme d'une pièce moulée par injection en matière plastique réalisée d'un seul tenant, la partie d'actionnement (20) étant disposée à l'extérieur de la partie de fond (11) et reliée au bouchon (16) via un étai (21) flexible, le bouchon (16) étant amené dans une position de fermeture disposée sur la partie de fond (11) (Flèche S₁) puis la partie d'actionnement (20) étant pivotée de telle sorte autour de l'étai (21) qu'elle est disposée dans l'espace intérieur de la partie de fond (11) en forme d'écuelle ou de calotte et agrippe une surface d'enveloppe (11a) de la partie de fond (11) au niveau d'un évidement (15).

18. Procédé de fabrication et de montage d'une fermeture sous forme de bouchon à charnière selon l'une quelconque des revendications 1 à 16, la partie de fond (11), le bouchon (16) et la partie d'actionnement (20) étant fabriquées sous la forme d'une pièce moulée par injection en matière plastique réalisée d'un seul tenant, la partie d'actionnement (20) étant disposée à l'extérieur de la partie de fond (11) et reliée au bouchon (16) via un étai (21) flexible, le bouchon (16) étant amené dans une position de fermeture disposée sur la partie de fond (11) (Flèche S₂) puis la partie d'actionnement (20) étant pivotée de telle sorte autour de l'étai (21) que la partie de fond (11) est disposée dans l'espace intérieur de la partie d'actionnement (20) en forme de carter, la partie de fond (11) agrippant une surface d'enveloppe (20a) de la partie d'actionnement (20) au niveau d'un évidement (20b).

19. Procédé selon la revendication 17 ou 18, **caractérisé en ce que** la partie d'actionnement (20) est encliquetée de telle sorte avec la partie de fond (11) qu'elle est maintenue de façon mobile contre elle.

20. Procédé selon l'une quelconque des revendications 17 à 19, **caractérisé en ce que** la partie de fond (11) et la partie d'actionnement (20) sont reliées au bouchon (16) au niveau de sections diamétralement opposées.
